# EUROPÄISCHE PATENTSCHRIFT

(11) **EP 3 312 810 B1**
(45) Veröffentlichungstag und Bekanntmachung des Hinweises auf die Patenterteilung: **28.09.2022**
(21) Anmeldenummer: 17197065.0
(22) Anmeldetag: 18.10.2017
(51) Int. Cl.: G08B 13/00, G08B 15/00, G08B 13/196

(54) **ABWEHREN EINER GEFÄHRDUNG**
DEFENCE AGAINST A HAZARD
DISPOSITIF DE PRÉVENTION D'UN DANGER

(30) Priorität: 20.10.2016 DE 102016120058
(43) Veröffentlichungstag der Anmeldung: 25.04.2018
(73) Patentinhaber: Deutsche Post AG, 53113 Bonn (DE)
(72) Erfinder: Wiechers, Ralph, 53508 Mayschoß (DE); Ibach, Christian, 53175 Bonn (DE)
(74) Vertreter: Cohausz & Florack

(56) Entgegenhaltungen:
- WO-A2-2009/147663
- DE-A1-102005 061 237
- GB-A- 2 166 225
- JP-A- 2017 124 809
- US-A1- 2006 038 678
- US-B1- 6 439 162

## Beschreibung

### Gebiet

Beispielhafte Ausführungsformen der Erfindung betreffen ein Verfahren zum Abwehren einer Gefährdung und/oder zum Veranlassen des Abwehrens einer Gefährdung. Ferner wird eine Steuerungsvorrichtung und ein Computerprogramm offenbart.

### Hintergrund

Im Stand der Technik sind unter anderem unbemannte Fahrzeuge mit einem Aufnahmefach oder mehreren Aufnahmefächern zum Transport von einer oder mehreren Sendungen bekannt. Diese unbemannten Fahrzeuge können während des Transports der Sendung verschiedenen Gefährdungen wie beispielsweise einem möglichen Diebstahl der Sendung ausgesetzt sein. In DE102005061237 wird eine Diebstahlschutzvorrichtung für Fahrzeuge, welche eine Reifenentleerungseinheit und eine Entleerungssteuerung aufweist, offenbart.

### Zusammenfassung einiger beispielhafter Ausführungsformen der Erfindung

Die vorliegende Erfindung hat sich daher unter anderem die Aufgabe gestellt, diese Probleme zu überwinden.

Gemäß der Erfindung ,wie in Anspruch 1 beansprucht, wird ein Verfahren zum Abwehren einer Gefährdung und/oder zum Veranlassen des Abwehrens einer Gefährdung offenbart, wobei das Verfahren von einer Steuerungsvorrichtung für ein unbemanntes Fahrzeug ausgeführt wird, und wobei das Verfahren Folgendes umfasst:
- Erhalten mehrerer Sensorinformationen;
- Bestimmen zumindest teilweise abhängig von den erhaltenen Sensorinformationen, ob eine Gefährdung besteht;
- Bestimmen, wenn bestimmt wird, dass eine Gefährdung besteht, zumindest einer Abwehrmaßnahme zum Abwehren der Gefährdung, wobei die zumindest eine Abwehrmaßnahme zu einer Gruppe von das unbemannte Fahrzeug oder einen Teil des unbemannten Fahrzeugs (2) fixierenden Abwehrmaßnahmen gehört, wobei die zumindest eine Abwehrmaßnahme aus der Gruppe der fixierenden Abwehrmaßnahmen die folgende Aktion umfasst: Auslösen eines Fixierungsmechanismus, wobei für den Fixierungsmechanismus Mittel zum Verankern des Fahrzeugs im Boden und/oder zum Anketten des unbemannten Fahrzeugs an ein Umgebungsobjekt eingerichtet sind;
- Ausführen und/oder Bewirken des Ausführens der zumindest einen Abwehrmaßnahme.

Gemäß der Erfindung wird ferner eine Steuerungsvorrichtung für ein unbemanntes Fahrzeug offenbart, wobei die Steuerungsvorrichtung Mittel eingerichtet zur Ausführung des erfindungsgemäßen Verfahrens oder jeweilige Mittel zur Ausführung der Schritte des erfindungsgemäßen Verfahrens umfasst.

Dabei können verschiedene Schritte optional von verschiedenen Mitteln ausgeführt werden.

Die Mittel der erfindungsgemäßen Steuerungsvorrichtung können Hardware- und/oder Software-Komponenten umfassen. Die Mittel können beispielsweise mindestens einen Speicher mit Programmanweisungen eines Computerprogramms (z.B. des erfindungsgemäßen Computerprogramms) und mindestens einen Prozessor ausgebildet zum Ausführen von Programmanweisungen aus dem mindestens einen Speicher umfassen. Dementsprechend soll gemäß der Erfindung auch eine Steuerungsvorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Steuerungsvorrichtung zu veranlassen, das erfindungsgemäße Verfahren auszuführen.

Alternativ oder zusätzlich können die Mittel ferner eine oder mehrere Kommunikationsschnittstellen (z.B. eine oder mehrere drahtlose und/oder drahtgebundene Netzwerkadapter) und/oder eine oder mehrere Sensoren umfassen.

Es versteht sich, dass die Steuerungsvorrichtung auch andere nicht aufgeführte Mittel umfassen kann.

Die erfindungsgemäße Steuerungsvorrichtung ist beispielsweise eine Steuerungsvorrichtung zum Steuern eines unbemannten Fahrzeugs. Alternativ oder zusätzlich dient die erfindungsgemäße Steuerungsvorrichtung zum Beispiel zum Abwehren einer Gefährdung und/oder zum Veranlassen des Abwehrens einer Gefährdung.

Gemäß der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die erfindungsgemäße Steuerungsvorrichtung) zu veranlassen, das erfindungsgemäße Verfahren auszuführen.

Das erfindungsgemäße Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Im Folgenden werden die Merkmale des erfindungsgemäßen Verfahrens, der erfindungsgemäßen Steuerungsvorrichtung und des erfindungsgemäßen Computerprogramms - teilweise beispielhaft - beschrieben.

Unter einem unbemannten Fahrzeug soll beispielsweise ein Luft-, Wasser- und/oder Landfahrzeug verstanden werden, zum Beispiel ein Luft-, Wasser- und/oder Landfahrzeug, das Mittel zum Aufnehmen und/oder Transportieren einer oder mehrerer Sendungen umfasst und sich zumindest teilweise autonom bewegen kann. Zum Beispiel umfasst das unbemannte Fahrzeug zumindest ein durch eine Tür und/oder Klappe verschließbares Aufnahmefach zum Aufnehmen und Transportieren einer oder mehrerer Sendungen. Es versteht sich, dass das unbemannte Fahrzeug auch mehrere durch eine Tür und/oder Klappe verschließbare Aufnahmefächer zum Aufnehmen und Transportieren einer oder mehrerer Sendungen aufweisen kann. Eine Sendung ist beispielsweise ein Packstück, ein Stückgut, eine Paketsendung (z.B. ein Paket) und/oder eine Briefsendung (z.B. ein Brief). Die Tür und/oder Klappe verschließt beispielsweise eine Gehäuse- und/oder Karosserieöffnung des unbemannten Fahrzeugs, durch die ein Aufnahmefach des Fahrzeugs zugänglich ist. Ein unbemanntes Fahrzeug ist beispielsweise nicht zum Transport von Personen (z.B. weder zum Transport eines Fahrers noch von Passagieren) vorgesehen.

Eine Sensorinformation repräsentiert beispielsweise eine durch einen Sensor an der Position des Sensors erfasste Umgebungseigenschaften (z.B. einen Wert einer an der Position des Sensors erfassbaren physikalischen oder chemischen Größe). Die Sensorinformationen repräsentieren beispielsweise durch verschiedene Sensoren (z.B. durch zumindest zwei verschiedene Sensoren) erfasste Umgebungseigenschaften.

Zum Beispiel können die Sensorinformationen zumindest teilweise durch das Erfassen von einer oder mehreren Umgebungseigenschaften durch einen oder mehrere Sensoren der Steuerungsvorrichtung erhalten werden. Alternativ oder zusätzlich kann das Erhalten der Sensorinformationen zumindest teilweise auch durch das Empfangen der Sensorinformationen durch eine drahtlose und/oder drahtgebundene Kommunikationsschnittstelle der Steuerungsvorrichtung erfolgen. Zum Beispiel können die Sensorinformationen zumindest teilweise durch eine solche drahtlose und/oder drahtgebundene Kommunikationsschnittstelle von einem oder mehreren Sensoren, die nicht Teil der Steuerungsvorrichtung sind, empfangen werden.

Unter einer Gefährdung soll beispielweise verstanden werden, dass eine bestimmte Wahrscheinlichkeit (z.B. mehr als 50 %, vorzugsweise mehr als 75 %, besonders vorzugsweise mehr als 90 %) einer Beschädigung (z.B. einer Funktionszerstörung und/oder Funktionsbeeinträchtigung) und/oder einer unberechtigten Verwendung (z.B. eines Diebstahls) des unbemannten Fahrzeugs und/oder einer von dem unbemannten Fahrzeug transportierten Sendung besteht. Das Bestimmen zumindest teilweise abhängig von den erhaltenen Sensorinformationen, ob eine Gefährdung besteht, ergibt dementsprechend beispielsweise, dass eine Gefährdung besteht, wenn sich aus den erhaltenen Sensorinformationen ergibt, dass eine bestimmte Wahrscheinlichkeit einer solchen Beschädigung und/oder unberechtigten Verwendung besteht. Zum Beispiel kann für bestimmte Sensorinformationen vorgegeben sein, dass, wenn diese erhalten werden, eine bestimmte Wahrscheinlichkeit für eine Beschädigung und/oder eine unberechtigte Verwendung besteht.

Als Ergebnis des Bestimmens, ob eine Gefährdung besteht, wird beispielsweise eine Gefährdungsinformation erhalten. Wie unten ausführlich offenbart wird, ist die Gefährdungsinformation beispielsweise indikativ für den Ort der Gefährdung, den Zeitpunkt der Gefährdung und/oder die Art der Gefährdung.

Eine Abwehrmaßnahme ist beispielsweise eine Aktion und/oder eine Abfolge von mehreren Aktionen.

Das Abwehren einer Gefährdung kann beispielsweise durch eine Abwehrmaßnahme erfolgen, durch die die Wahrscheinlichkeit der Beschädigung und/oder der unberechtigten Verwendung des unbemannten Fahrzeugs und/oder einer von dem unbemannten Fahrzeug transportierten Sendung verringert wird. Dementsprechend kann die zumindest eine Abwehrmaßnahme zum Abwehren der Gefährdung derart bestimmt werden, dass sie die Wahrscheinlichkeit einer solchen Beschädigung und/oder unberechtigten Verwendung verringert. Zum Beispiel kann für bestimmte Abwehrmaßnahmen vorgegeben sein, dass diese die Wahrscheinlichkeit für eine Beschädigung und/oder eine unberechtigte Verwendung (z.B. für eine oder mehrere Arten von Gefährdung) verringern.

Eine Gefährdung kann zum Beispiel vorliegen, wenn eine bestimmte Wahrscheinlichkeit (z.B. mehr als 50 %, vorzugsweise mehr als 75 %, besonders vorzugsweise mehr als 90 %) für einen Diebstahl einer von dem unbemannten Fahrzeug transportierten Sendung besteht. Die Wahrscheinlichkeit für einen solchen Diebstahl kann zusätzlich zu der erfindungsgemässen einen bestimmten fixierenden Abwehrmassnahme beispielsweise durch eine signalbasierte Abwehrmaßnahme in Form einer Video- und/oder Bildüberwachung des unbemannten Fahrzeugs verringert werden. Zum Beispiel könnten Passanten durch eine solche signalbasierte Abwehrmaßnahme auf den möglichen Diebstahl aufmerksam werden, so dass der Dieb von seinem Vorhaben ablässt.

Unter dem Bewirken des Ausführens der Abwehrmaßnahme soll beispielsweise verstanden werden, dass die Steuerungsvorrichtung das unbemannte Fahrzeug und/oder Mittel des unbemannten Fahrzeugs derart ansteuert, dass das unbemannte Fahrzeug und/oder die Mittel des unbemannten Fahrzeugs die Abwehrmaßnahme ausführen.

Die vorliegende Erfindung ermöglicht somit eine flexible und situationsabhängige Reaktion auf eine Gefährdung, um die Gefährdung abwehren zu können.

In beispielhaften Ausführungsformen der Erfindung stammen die Sensorinformationen von einem oder mehreren Sensoren (z.B. von mehreren verschiedenen Sensoren). Zum Beispiel sollen die Sensorinformationen als von einem oder mehreren Sensoren stammend verstanden werden, wenn die Sensorinformationen durch diese Sensoren bereitgestellt werden und/oder durch diese Sensoren erfasste Umgebungseigenschaften repräsentieren.

Zum Beispiel stammen die Sensorinformationen von einem oder mehreren der folgenden Sensoren: ein Temperatursensor (z.B. ein Thermometer, ein Thermoelement und/oder ein Thermowiderstand), ein Drucksensor, ein Helligkeitssensor, ein Bewegungssensor (z.B. ein Bewegungsmelder), ein akustischer Sensor (z.B. ein Mikrofon und/oder ein Geräuschsensor), ein Ultraschallsensor, ein optischer Sensor, ein Infrarotsensor, ein Lichtsensor (z.B. ein Helligkeitssensor, eine Photodiode und/oder ein Photowiderstand), ein Bildsensor (z.B. eine Bildkamera, ein CMOS-Sensor und/oder ein CCD-Sensor), ein Videosensor (z.B. eine Videokamera, ein CMOS-Sensor und/oder ein CCD-Sensor), ein chemischer Sensor (z.B. ein Gassensor), ein Glasbruchsensor, ein Bewegungssensor, ein Funksensor (z.B. eine drahtlose Kommunikationsschnittstelle und/oder ein WLAN-, NFC- und/oder Bluetooth-Sensor), ein Positionssensor (z.B. ein GPS-Sensor), ein Tür- und/oder Fenster-Öffnungssensor (z.B. ein Kontaktsensor), ein Fingerabdrucksensor und/oder ein Beschleunigungssensor.

In beispielhaften Ausführungsformen der Erfindung erfolgt das Bestimmen, ob eine Gefährdung besteht, gemäß einer oder mehreren vorgegebenen Regeln und/oder gemäß einem Algorithmus zur Mustererkennung und/oder gemäß einem Algorithmus zum maschinellen Lernen.

Die vorgegebenen Regeln, können beispielsweise für den Fall, dass bestimmte Sensorinformationen erhalten werden, vorgeben, dass eine Gefährdung besteht. Ferner können die Regeln vorgeben, welcher Art eine Gefährdung ist, wenn bestimmt wird, dass eine Gefährdung besteht. Zum Beispiel können die Regeln vorgeben, dass eine Gefährdung besteht, wenn die Sensorinformationen ergeben, dass das unbemannte Fahrzeug sich nicht mehr bewegt, obwohl der Antrieb des unbemannten Fahrzeugs läuft, und/oder wenn ein Türöffnungssensor anzeigt, dass die Tür des Aufnahmefachs geöffnet wurde oder an der Tür gerüttelt oder darauf geschlagen wurde, ohne dass zuvor ein Türöffnungsberechtigungscode (z.B. durch eine Eingabe auf einer Benutzerschnittstelle der Steuerungsvorrichtung und/oder des unbemannten Fahrzeugs) erhalten wurde.

Bei der Mustererkennung kann es sich beispielsweise um eine statistische Mustererkennung handeln. Zum Beispiel wird dabei für die erhaltenen Sensorinformationen eine Wahrscheinlichkeit dafür bestimmt, dass eine Gefährdung besteht. Ferner wird beispielsweise für die erhaltenen Sensorinformationen eine Wahrscheinlichkeit dafür bestimmt, dass keine Gefährdung besteht. Zum Beispiel ergibt das Bestimmen, ob eine Gefährdung besteht, nur dann, dass eine Gefährdung besteht, wenn die Wahrscheinlichkeit dafür, dass eine Gefährdung besteht, höher ist als die Wahrscheinlichkeit dafür, dass keine Gefährdung besteht. Außerdem können beispielsweise die Wahrscheinlichkeiten für verschiedene Arten von Gefährdungen bestimmt werden, um die Art der Gefährdung bestimmen zu können. Algorithmen zur Mustererkennung basieren beispielsweise zumindest teilweise auf einem künstlichen neuronalen Netz, einer Support Vector Maschine, einer Clusteranalayse oder einer Kombination mehrerer (z.B. aller) dieser Techniken.

Das maschinelle Lernen kann beispielsweise in Form eines überwachten maschinellen Lernens (engl. supervised machine learning) erfolgen. Beim überwachten maschinellen Lernen wird das Ergebnis des Bestimmens, ob eine Gefährdung besteht, in einer Lernphase beispielsweise durch einen Vergleich der erhaltenen Sensorinformationen mit Referenzsensorinformationen überwacht und der Algorithmus angepasst, um eine Abweichung des Ergebnisses von einem Referenzergebnis, das den erhaltenen Sensorinformationen entsprechenden Referenzsensorinformationen zugeordnet ist, zu minimieren. Zum Beispiel geben die Referenzergebnisse das Ergebnis des Bestimmens, ob eine Gefährdung besteht und/oder welcher Art die Gefährdung ist, für bestimmte Referenzsensorinformationen vor. Die Referenzsensorinformationen und Referenzergebnisse können beispielsweise von einer oder mehreren anderen Steuerungsvorrichtungen stammen oder durch Testversuche erhalten werden. Algorithmen zum maschinellen Lernen können ebenfalls zumindest teilweise auf einem künstlichen neuronalen Netz, einer Support Vector Maschine, einer Clusteranalyse oder einer Kombination mehrerer (z.B. aller) dieser Techniken basieren.

In beispielhaften Ausführungsformen der Erfindung erfolgt das Bestimmen der zumindest einen Abwehrmaßnahme gemäß einer oder mehreren vorgegebenen Regeln und/oder gemäß einem Algorithmus zur Mustererkennung und/oder gemäß einem Algorithmus zum maschinellen Lernen.

Die vorgegebenen Regeln, können beispielsweise vorgeben, welche Abwehrmaßnahme zusätzlich zu der erfindungsgemässen einen bestimmten fixierenden Abwehrmaßnahme unter welchen Bedingungen zum Abwehren der Gefährdung bestimmt werden soll.

Zum Beispiel erfolgt das Bestimmen der zumindest einen fixierenden Abwehrmaßnahme zum Abwehren der Gefährdung zumindest teilweise abhängig von der Art der Gefährdung. Die vorgegebenen Regeln können in diesem Beispiel vorgeben, welche Abwehrmaßnahme zusätzlich zu der erfindungsgemässen einen bestimmten fixierenden Abwehrmaßnahme bei welcher Art von Gefährdung zum Abwehren der Gefährdung bestimmt werden soll. Die Art der Gefährdung wird beispielsweise zumindest teilweise als Ergebnis des Bestimmens, ob eine Gefährdung besteht, erhalten und/oder bestimmt, wenn bestimmt wird, das eine Gefährdung besteht.

Erfindungsgemäss erfolgt das Bestimmen der zumindest einen Abwehrmaßnahme zum Abwehren der Gefährdung durch das Auswählen der zumindest einen Abwehrmaßnahme zum Abwehren der Gefährdung aus einer Vielzahl von Abwehrmaßnahmen einer Gruppe von das unbemannte Fahrzeug oder einen Teil des unbemannten Fahrzeugs fixierenden Abwehrmaßnahmen. Die Vielzahl von Abwehrmaßnahmen zusätzlich zu der erfindungsgemässen einen bestimmten fixierenden Abwehrmaßnahme sind beispielsweise alle von dem unbemannten Fahrzeug und/oder Mitteln des unbemannten Fahrzeugs ausführbare Abwehrmaßnahmen und/oder alle von dem unbemannten Fahrzeug und/oder Mitteln des unbemannten Fahrzeugs ausführbare Abwehrmaßnahmen einer bestimmten Gruppe von Abwehrmaßnahmen.

In diesem Beispiel kann das Auswählen gemäß den vorgegebenen Regeln erfolgen, die beispielsweise vorgeben, welche Abwehrmaßnahme zusätzlich zu der erfindungsgemässen einen bestimmten fixierenden Awehrmaßnahme bei welcher Art von Gefährdung ausgewählt werden soll. Alternativ oder zusätzlich geben diese Regeln beispielsweise vor, ob und unter welchen Bedingungen eine bestimmte Abwehrmaßnahme zusätzlich zu der erfindungsgemässen einen bestimmten fixierenden Abwehrmaßnahme zum Abwehren einer bestimmten Art von Gefährdung ausgewählt werden soll. Zum Beispiel geben die Regeln eine Reihenfolge vor in der die Abwehrmaßnahmen ausgewählt werden sollen. Alternativ, jedoch nicht als Beispiel der gegenständlichen Erfindung kann die Reihenfolge vorsehen, dass nur milde Abwehrmaßnahmen (z.B. Abwehrmaßnahmen aus der Gruppe der signalbasierten und/oder bewegungsbasierten Abwehrmaßnahmen) ausgewählt werden sollen, wenn erstmalig bestimmt wird, dass eine Gefährdung besteht. Wenn bestimmt wird, dass die Gefährdung nach dem Ausführen dieser milden Abwehrmaßnahmen weiterhin besteht, sollen beispielsweise weniger milde Abwehrmaßnahmen (z.B. Abwehrmaßnahmen aus der Gruppe der bei Kontakt mit und/oder in einer Entfernung zu dem unbemannten Fahrzeug oder eine Teil des unbemannten Fahrzeugs wirkenden Abwehrmaßnahmen) ausgewählt werden.

Es versteht sich, dass das Auswählen der zumindest einen Abwehrmaßnahme zusätzlich zu der erfindungsgemässen einen bestimmten fixierenden Abwehrmaßnahme zum Abwehren der Gefährdung aus der Vielzahl von Abwehrmaßnahmen alternativ oder zusätzlich gemäß einem Algorithmus zur Mustererkennung und/oder gemäß einem Algorithmus zum maschinellen Lernen erfolgen kann. Im Rahmen der Mustererkennung kann beispielsweise jede Abwehrmaßnahme der Vielzahl von Abwehrmaßnahmen in Abhängigkeit ihrer Eignung (z.B. Effektivität) die Gefährdung abzuwehren gewichtet werden. Zum Beispiel entspricht die Gewichtung einer Wirksamkeitserwartung und/oder der Wahrscheinlichkeit, mit der die jeweilige Abwehrmaßnahme die Wahrscheinlichkeit der Beschädigung und/oder der unberechtigten Verwendung des unbemannten Fahrzeugs und/oder einer von dem unbemannten Fahrzeug transportierten Sendung verringert. Ferner kann auch eine Verhältnismäßigkeitsabwägung (z.B. persönlicher Schaden, sozialer Schaden, Sachschaden) und/oder mögliche Kollateralschäden bei der Gewichtung berücksichtigt werden. Zum Beispiel kann von zwei Abwehrmaßnahmen, die beide die Wahrscheinlichkeit der Beschädigung und/oder der unberechtigten Verwendung des unbemannten Fahrzeugs und/oder einer von dem unbemannten Fahrzeug transportierten Sendung gleich verringern, die Abwehrmaßnahme höher gewichtet werden, die wahrscheinlich die geringeren Kollateralschäden bewirkt. Zum Beispiel wird zumindest die Abwehrmaßnahme zusätzlich zu der erfindungsgemässen einen bestimmten fixierenden Abwehrmaßnahme zum Abwehren der Gefährdung ausgewählt, die am höchsten gewichtet ist.

Es versteht sich, dass auch mehrere oder alle Abwehrmaßnahmen zusätzlich zu der erfindungsgemässen einen bestimmten fixierenden Abwehrmaßnahme aus der Vielzahl von Abwehrmaßnahmen ausgewählt werden können. Zum Beispiel kann vorgegeben sein, dass alle Abwehrmaßnahmen oder alle Abwehrmaßnahmen mit einer bestimmten Mindestgewichtung veranlasst werden.

Wie oben offenbart, soll unter einer Abwehrmaßnahme eine Aktion und/oder eine Abfolge von Aktionen verstanden werden.

Eine signalbasierte Abwehrmaßnahme umfasst beispielsweise die folgende Aktion:
- Ausgeben eines Signals, insbesondere eines optischen und/oder akustischen und/oder olfaktorisches Signal.

Ein optisches Signal ist beispielsweise ein optisch wahrnehmbares Signal wie ein Lichtsignal und/oder ein Bildsignal, ein akustisches Signal ist beispielsweise ein akustisch wahrnehmbares Signal wie ein Geräuschsignal und/oder ein Sprachsignal, ein olfaktorisches Signal ist beispielsweise ein olfaktorisch wahrnehmbares Signal wie ein Geruchssignal. Hierdurch kann beispielsweise Aufmerksamkeit und/oder eine für einen möglichen Angreifer (z.B. einen möglichen Vandalen und/oder Dieb) eine unangenehme Situation erzeugt werden, um den möglichen Angreifer von seinem Vorhaben (z.B. Vandalismus und/oder ein Diebstahl) abzubringen.

Zum Beispiel können durch ein Sprachsignal zunächst weitere Abwehrmaßnahmen angedroht werden. Hierbei können ggfs. auch Abwehrmaßnahmen in Form eines Bluffs angedroht werden, die das unbemannte Fahrzeug gar nicht ausführen kann, um den möglichen Angreifer von seinem Vorhaben abzubringen. Auch besteht die Möglichkeit, dass ein Operator in einer Überwachungszentrale versucht mit dem möglichen Angreifer über solche Signalmittel Kontakt aufzunehmen, wenn die Steuerungsvorrichtung und/oder das unbemannte Fahrzeug kommunikativ mit einer Überwachungszentrale (z.B. mit einem Server der Überwachungszentrale) verbunden ist. Ferner kann der möglicher Angreifer, wenn er (z.B. in Abhängigkeit einer oder mehrerer der Sensorinformationen) identifiziert werden kann, auch persönlich angesprochen werden, um ihn abzuschrecken.

Sensorinformationen die für eine solche Identifizierung genutzt werden können sind beispielsweise Bild- und/oder Videoaufnahmen (z.B. für eine Gesichtserkennung und/oder Gesichtssuche), Fingerabdruckinformationen (z.B. können Fingerabdrücke eines möglichen Angreifers über an einer Tür und/oder einer Klappe eines Aufnahmefachs angeordnete Fingerabdrucksensor(en) erfasst und zur Identifizierung genutzt werden), und/oder Geräteinformationen wie eine Kennung (z.B. eine eindeutige Kennung, eine MAC-Adresse, ein Netzwerkname, eine sog. International Mobile Subscriber Identity, etc.) eines oder mehrerer sich in der Umgebung befindlichen mobilen Geräte (z.B. eines oder mehrere Mobiltelefone). Die Identifizierung kann beispielsweise durch die Steuerungsvorrichtung ausgeführt werden. Alternativ oder zusätzlich kann die Identifizierung auch durch eine von der Steuerungsvorrichtung verschiedene Vorrichtung (z.B. einen Server wie einen Server einer Überwachungszentrale und/oder einen Server der Polizei) ausgeführt werden, mit dem die Steuerungsvorrichtung und/oder das unbemannte Fahrzeug kommunikativ verbunden ist.

Zum Beispiel umfasst das unbemannte Fahrzeug Signalmittel eingerichtet zum Ausgeben eines Signals. Beispiele für optische Signalmittel eingerichtet zum Ausgeben eines optischen Signals sind eine Lampe, eine Warnlampe, ein Blinklicht, ein Stroboskoplicht und/oder ein Bildschirm; Beispiele für akustische Signalmittel eingerichtet zum Ausgeben eines akustischen Signals sind eine Sirene, ein Lautsprecher und/oder eine Schallkanone; Beispiele für olfaktorische Signalmittel eingerichtet zum Ausgeben eines olfaktorischen Signals sind ein Elektroverdampfer und/oder Sprühsysteme (z.B. Gasdruck betriebene Sprühsysteme).

Eine bewegungsbasierte Abwehrmaßnahme kann beispielsweise eine oder mehrere der folgenden Aktionen umfassen:
- Verändern der Bewegungsgeschwindigkeit des unbemannten Fahrzeugs, und/oder
- Verändern der Bewegungsrichtung des unbemannten Fahrzeugs.

Das Verändern der Bewegungsgeschwindigkeit kann beispielsweise in Form eine Beschleunigung und/oder Verzögerung des unbemannten Fahrzeugs stattfinden. Beispielsweise ist die Steuerungsvorrichtung eingerichtet, einen Antrieb und/oder eine Bremsanlage des unbemannten Fahrzeugs zum Verändern der Bewegungsgeschwindigkeit des unbemannten Fahrzeugs anzusteuern.

Unter dem Verändern der Bewegungsrichtung des unbemannten Fahrzeugs soll beispielsweise verstanden werden, dass das unbemannte Fahrzeug von einer vorgegebenen Route (z.B. einer Transportroute und/oder einer Navigationsroute und/oder einer optimalen Route) abweicht. Beispielsweise ist die Steuerungsvorrichtung eingerichtet, eine Lenkanlage des unbemannten Fahrzeugs zum Verändern der Bewegungsrichtung des unbemannten Fahrzeugs anzusteuern.

Die Bewegungsgeschwindigkeit und/oder die Bewegungsrichtung des unbemannten Fahrzeugs können beispielsweise derart verändert werden, dass das unbemannte Fahrzeug eine oder mehrere Ausweichmanöver und/oder Ausweichbewegungen ausführt. Ein solches Ausweichmanöver und/oder eine solche Ausweichbewegung können zum Beispiel in Form von Beschleunigungs- und Verzögerungsprofilen und/oder Lenkprofilen vorgegeben sein. Die Beschleunigungs- und Verzögerungsprofile und/oder Lenkprofile sind beispielsweise derart gewählt, dass das Ausweichmanöver und/oder die Ausweichbewegung nur schwer vorhersehbar ist, so dass ein Einholen und/oder Berühren des unbemannten Fahrzeugs durch einen möglichen Angreifer erschwert wird (z.B. wenn die Art der Gefährdung Vandalismus und/oder ein mögliches Ausspähen und/oder ein möglicher Diebstahl ist).

Eine bei Kontakt mit dem unbemannten Fahrzeug oder einem Teil des unbemannten Fahrzeugs wirkende Abwehrmaßnahme umfasst zum Beispiel eine oder mehrere der folgenden Aktionen:
- Verändern der Oberfläche oder eines Teils der Oberfläche des unbemannten Fahrzeugs,
- Anlegen einer elektrischen Spannung an der Oberfläche oder eines Teils der Oberfläche des unbemannten Fahrzeugs, und/oder
- Benetzen der Oberfläche oder eines Teils der Oberfläche des unbemannten Fahrzeugs mit einer Flüssigkeit.

Unter dem Verändern der Oberfläche oder eines Teils der Oberfläche des unbemannten Fahrzeugs soll beispielsweise verstanden werden, dass in und/oder an der Oberfläche oder eines Teils der Oberfläche des unbemannten Fahrzeugs angeordnete Stacheln und/oder Haken ausgefahren werden.

Das Anlegen einer elektrischen Spannung an der Oberfläche oder eines Teils der Oberfläche des unbemannten Fahrzeugs kann beispielsweise in Form von Spannungsimpulsen erfolgen, die von einem elektrischen Spannungsgenerator des unbemannten Fahrzeugs erzeugt werden. Die maximale Spannung eines solchen Spannungsimpulses liegt beispielsweise in einem Bereich zwischen 2 kV und 10 kV. Die Dauer eines solchen Spannungsimpulses liegt beispielsweise in einem Bereich zwischen 5 µs und 10 ms. Die Stromstärke während eines solchen Spannungsimpulses ist beispielsweise auf maximal 15 A beschränkt. Zum Beispiel sind die maximale Spannung, Dauer und maximale Stromstärke des Spannungsimpulses derart gewählt, dass eine Person, wenn sie die Oberfläche oder den Teil der Oberfläche des unbemannten Fahrzeugs berührt, einen (voraussichtlich) nicht-tödlichen elektrischen-Schlag erhält.

Die zum Benetzen der Oberfläche oder eines Teils der Oberfläche des unbemannten Fahrzeugs verwendete Flüssigkeit kann beispielsweise eine Markierungsflüssigkeit und/oder eine Schmierflüssigkeit, die die Reibung auf der Oberfläche oder des Teils der Oberfläche des unbemannten Fahrzeugs verringert, sein. Eine Markierungsflüssigkeit ist beispielsweise künstliche DNA (z.B. eine Flüssigkeit mit synthetisch hergestellten Oligonukleotiden) und/oder eine Farbe (z.B. eine schwer abwaschbare Farbe). Eine Schmierflüssigkeit ist beispielsweise ein Öl und/oder eine Seifenlauge. Die Flüssigkeit kann beispielsweise in einem Tank in dem unbemannten Fahrzeug enthalten sein und durch Auslässe an der Oberfläche oder des Teils der Oberfläche des unbemannten Fahrzeugs ausgegeben werden.

Diese bei Kontakt mit dem unbemannten Fahrzeug oder einem Teil des unbemannten Fahrzeugs wirkenden Abwehrmaßnahmen sind beispielsweise vorteilhaft, um ein Berühren des unbemannten Fahrzeugs durch einen möglichen Angreifer (z.B. einen Vandalen und/oder Dieb) zu erschweren und/oder zu verhindern und/oder nachweisen zu können.

Eine in einer Entfernung zu dem unbemannten Fahrzeug oder einem Teil des unbemannten Fahrzeugs wirkende Abwehrmaßnahme umfasst beispielsweise eine oder mehrere der folgenden Aktionen:
- Auswerfen eines Fangnetzes,
- Auslösen einer Distanz-Elektroimpulswaffe,
- Auslösen einer Schall- und/oder Strahlenkanone, und/oder
- Versprühen einer Flüssigkeit und/oder eines Gases.

Das Fangnetz kann zum Beispiel derart ausgeworfen werden, dass ein möglicher Angreifer dadurch getroffen und beispielsweise behindert wird. Das Fangnetz wird beispielsweise durch eine Netzpistole des unbemannten Fahrzeugs ausgeworfen. Die Distanz-Elektroimpulswaffe ist beispielsweise eine Elektroschockpistole (z.B. ein sogenannter Taser). Die Distanz-Elektroimpulswaffe wird beispielsweise derart ausgelöst, dass ein möglicher Angreifer dadurch getroffen und ein oder mehrere elektrische Spannungsimpulse an den möglichen Angreifer übertragen werden. Wie oben offenbart, liegt die maximale Spannung eines solchen Spannungsimpulses beispielsweise in einem Bereich zwischen 2 kV und 10 kV. Die Dauer eines solchen Spannungsimpulses liegt beispielsweise in einem Bereich zwischen 5 µs und 10 ms. Die Stromstärke während eines solchen Spannungsimpulses ist beispielsweise auf maximal 15 A beschränkt. Zum Beispiel sind die maximale Spannung, Dauer und maximale Stromstärke der Spannungsimpulse derart gewählt, dass sie einen (voraussichtlich) nicht-tödlichen elektrischen-Schlag bei einer von der Distanz-Elektroimpulswaffe getroffenen Person bewirken.

Eine Schallkanone ist beispielsweise eingerichtet, ein Geräusch mit einem derart hohen Schalldruckpegel auszugeben, wenn sie ausgelöst wird, dass bei einem möglichen Angreifer Unbehaglichkeit und Schmerzempfindungen bewirkt werden. Dabei kann die Unbehaglichkeitsschwelle von der Art und Herkunft des Geräusches abhängen und die Schmerzschwelle kann je nach Frequenzzusammensetzung des Geräusches zwischen 120 dB und 140 dB liegen. Zum Beispiel wird das Geräusch derart ausgegeben, dass es (voraussichtlich) keine bleibenden körperlichen Schäden bei einer getroffenen Person (z.B. einem möglichen Angreifer) bewirkt.

Unter einer Strahlenkanone soll beispielsweise das sogenannte Active Denial System (ADS) verstanden werden. Eine solche Strahlenkanone kann, wenn sie ausgelöst wird, beispielsweise starke und gerichtete Mikrowellen (z.B. mit einer Frequenz von 95 GHz) auf einen möglichen Angreifer ausstrahlen. Die Mikrowellenstrahlen können beispielsweise mit einer entsprechend eingerichteten Antenne auf mögliche Angreifer in einer Entfernung von bis zu mehr als 500 Metern gerichtet werden. Die Energie der Mikrowellenstrahlen ist beispielsweise derart gewählt, dass die die Wassermoleküle in der Haut des möglichen Angreifers innerhalb von Sekunden auf ungefähr 55 °C erhitzen und somit einen Schmerzreiz bewirken. Zum Beispiel werden die Mikrowellenstrahlen derart gewählt, dass sie (voraussichtlich) keine bleibenden körperlichen Schäden bei einer getroffenen Person (z.B. einem möglichen Angreifer) bewirken.

Die zum Versprühen verwendete Flüssigkeit ist beispielsweise eine Markierungsflüssigkeit und/oder eine Schmierflüssigkeit; und das zum Versprühen verwendete Gas ist beispielsweise ein Reizgas und/oder Tränengas. Die Flüssigkeit und/oder das Gas kann beispielsweise in einem Tank in dem unbemannten Fahrzeug enthalten sein und durch eine oder mehrere Düsen versprüht werden.

Die das unbemannte Fahrzeug oder einen Teil des unbemannten Fahrzeugs erfindungsgemäße fixierende Abwehrmaßnahme umfasst die folgende Aktion:
- Auslösen eines Fixierungsmechanismus.

Erfindungsgemäß sind Mittel eingerichtet zum Verankern des unbemannten Fahrzeugs im Boden und/oder zum Anketten des unbemannten Fahrzeugs an einem Umgebungsobjekt (z.B. einem Laternenmast, einem Baum oder einem Fahrrad). Ein Beispiel für ein solches Mittel ist ein Schraubgerät, das eingerichtet ist, zur Fixierung des unbemannten Fahrzeugs eine oder mehrere mit dem unbemannten Fahrzeug verbundene Schraube in den Boden und/oder ein oder mehrere Umgebungsobjekte einschrauben. Ein weiteres Beispiel für ein solches Mittel ist ein Nagelgerät (z.B. ein Druckluft getriebenes Nagelschussgerät), das eingerichtet ist, zur Fixierung des unbemannten Fahrzeugs eine oder mehrere mit dem unbemannten Fahrzeug verbundenen Nägel in den Boden und/oder ein oder mehrere Umgebungsobjekte zutreiben (z.B. zu schießen). Ferner ist auch denkbar, dass ein Fanghaken, der eingerichtet ist, sich auszuklappen, um sich zur Fixierung des unbemannten Fahrzeugs mit einem oder mehrere Umgebungsobjekten zur Verhaken, ein solches Mittel darstellt. Weitere Beispiele für solche Mittel sind beispielsweise ein Klebegeräte, das eingerichtet ist, das unbemannte Fahrzeug mit dem Boden und/oder einem oder mehreren Umgebungsobjekten zu Verkleben, und/oder eine Art automatisiertes Bügelschloss.

In beispielhaften Ausführungsformen der Erfindung umfasst das Verfahren ferner Folgendes:
- Speichern und/oder Veranlassen des Speicherns von Dokumentationsinformationen zum Dokumentieren der Gefährdung und/oder der Abwehr der Gefährdung.

Die Dokumentationsinformationen enthalten beispielsweise Sensorinformationen. Zum Beispiel werden die Dokumentationsinformationen in einem Speicher der Steuerungsvorrichtung gespeichert.

In beispielhaften Ausführungsformen der Erfindung umfasst das Verfahren ferner Folgendes:
- Erhalten weiterer Sensorinformationen; und
- Bestimmen zumindest teilweise abhängig von den erhaltenen weiteren Sensorinformationen, ob die Gefährdung weiterhin besteht.

Zum Beispiel werden die weiteren Sensorinformationen nach dem Bewirken der zumindest einen Abwehrmaßnahme erhalten. Anhand dieser weiteren Sensorinformationen kann der Erfolg der zumindest einen Abwehrmaßnahme bestimmt werden.

Das Bestimmen zumindest teilweise abhängig von den erhaltenen weiteren Sensorinformationen, ob die Gefährdung weiterhin besteht, erfolgt beispielsweise entsprechend dem oben offenbarten Bestimmen zumindest teilweise abhängig von den erhaltenen Sensorinformationen, ob eine Gefährdung besteht. Wenn sich ergibt, dass die Gefährdung nicht mehr besteht, wird beispielsweise ein Stopp der zumindest einen Abwehrmaßnahme bewirkt. Andernfalls wird die zumindest eine Abwehrmaßnahme fortgesetzt und/oder eine weitere Abwehrmaßnahme (z.B. eine, wie oben offenbart, weniger milde Abwehrmaßnahme) zum Abwehren der Gefährdung bestimmt.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden. Es zeigen:
- Fig. 1: eine schematische Darstellung einer beispielhaften Ausführungsform einer erfindungsgemäßen Steuerungsvorrichtung;
- Fig. 2: eine schematische Darstellung einer beispielhaften Ausführungsform eines unbemannten Fahrzeugs;
- Fig. 3: ein Flussdiagramm des prinzipiellen Verfahrens; und
- Fig. 4: beispielhafte Ausführungsformen von Speichermedien.

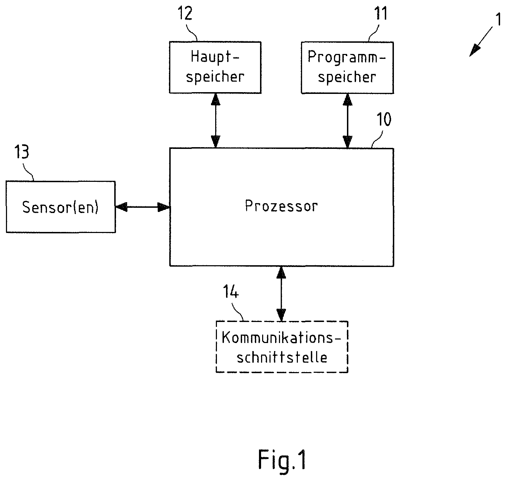

Fig. 1 ist eine schematische Darstellung einer beispielhaften Ausführungsform einer erfindungsgemäßen Steuerungsvorrichtung 1.

Die Steuerungsvorrichtung 1 umfasst beispielhaft einen Prozessor 10 und verbunden mit dem Prozessor 10 einen ersten Speicher als Programm- und Datenspeicher 11, einen zweiten Speicher als Hauptspeicher 12 und einen oder mehrere Sensoren 13. Ferner kann Steuerungsvorrichtung 1 eine optionale drahtlose Kommunikationsschnittstelle 14 umfasst.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Steuerungsvorrichtung 1 auch mehrere Prozessoren 10 umfassen kann.

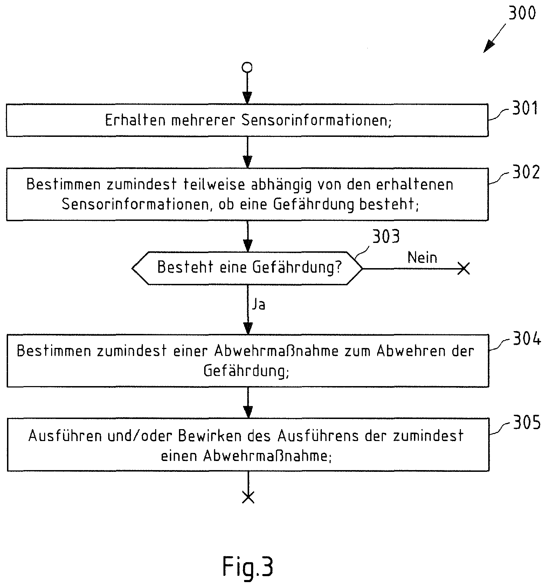

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines erfindungsgemäßen Computerprogramms, das Programmanweisungen umfasst, die den Prozessor 10 veranlassen, das erfindungsgemäße Verfahren (z.B. das Verfahren gemäß dem in Fig. 3 dargestellten Flussdiagram 300) auszuführen und/oder zu steuern, wenn der Prozessor 10 diese in Programmspeicher 11 gespeicherten Programmanweisungen ausführt.

Programmspeicher 11 enthält ferner beispielsweise das Betriebssystem der Steuerungsvorrichtung 1, das beim Starten der Steuerungsvorrichtung 1 zumindest teilweise in Hauptspeicher 12 geladen und vom Prozessor 10 ausgeführt wird. Insbesondere wird beim Starten der Steuerungsvorrichtung 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuerungsvorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

Darüber hinaus weist Steuerungsvorrichtung 1 einen oder mehrere Sensoren 13 auf. Die Sensoren 13 sind zum Beispiel eingerichtet zum Erfassen einer Umgebungseigenschaften (z.B. eines Messwert einer an der Position des Sensors erfassbaren physikalischen oder chemischen Größe). Ferner sind die Sensoren 13 beispielsweise eingerichtet zum Bereitstellen von Sensorinformationen, die die durch die Sensoren 13 erfassten Umgebungseigenschaften repräsentieren. Diese Sensorinformationen stammen von den Sensoren 13 und können vom Prozessor 10 beispielsweise weiterverarbeitet werden.

Die Sensoren 13 umfassen beispielsweise einen oder mehrere der folgenden Sensoren: ein Temperatursensor (z.B. ein Thermometer, ein Thermoelement und/oder ein Thermowiderstand), ein Drucksensor, ein Helligkeitssensor, ein Bewegungssensor (z.B. ein Bewegungsmelder), ein akustischer Sensor (z.B. ein Mikrofon und/oder ein Geräuschsensor), ein Ultraschallsensor, ein optischer Sensor, ein Infrarotsensor, ein Lichtsensor (z.B. ein Helligkeitssensor, eine Photodiode und/oder ein Photowiderstand), ein Bildsensor (z.B. eine Bildkamera, ein CMOS-Sensor und/oder ein CCD-Sensor), ein Videosensor (z.B. eine Videokamera, ein CMOS-Sensor und/oder ein CCD-Sensor), ein chemischer Sensor (z.B. ein Gassensor), ein Glasbruchsensor, ein Bewegungssensor, ein Funksensor (z.B. eine drahtlose Kommunikationsschnittstelle und/oder ein WLAN-, NFC- und/oder Bluetooth-Sensor), ein Positionssensor (z.B. ein GPS-Sensor), ein Tür- und/oder Fenster-Öffnungssensor (z.B. ein Kontaktsensor) und/oder ein Beschleunigungssensor.

Alternativ oder zusätzlich sind die Sensoren 13 zumindest teilweise extern zu der Steuerungsvorrichtung 1. In diesem Fall können die Sensorinformationen der externen Sensoren 13 beispielsweise durch die optionale drahtlose Kommunikationsschnittstelle 14 (oder eine weitere drahtgebundene oder drahtlose Kommunikationsschnittstelle) empfangen werden.

Prozessor 10 steuert die optionale drahtlose Kommunikationsschnittstelle 14.

Eine drahtlose Kommunikationsschnittstelle kann beispielsweise Informationen gemäß einer drahtlosen Kommunikationstechnik (über einen drahtlosen Kommunikationspfad) empfangen und an den Prozessor weiterleiten und/oder Informationen von dem Prozessor empfangen und (über einen drahtlosen Kommunikationspfad) gemäß einer drahtlosen Kommunikationstechnik senden.

Ein Beispiel für eine drahtlose Kommunikationstechnik ist eine lokale Funknetztechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC- sind beispielsweise gemäß den ISO-Standards 18000, 11784/11785 und dem ISO/IEC-Standard 14443-A und 15693 spezifiziert. Die Bluetooth-Spezifikationen sind derzeit im Internet unter www.bluetooth.org erhältlich. WLAN ist zum Beispiel in den Standards der IEEE-802.11-Familie spezifiziert. Ein weiteres Beispiel für eine drahtlose Kommunikationstechnik ist eine überregionale Funknetztechnik wie beispielsweise eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich. In einigen beispielhaften Ausführungsformen der Erfindung soll unter einer drahtlosen Kommunikationstechnik auch eine Rundfunktechnik wie beispielsweise DAB (Digital Audio Broadcasting) und/oder DMB (Digital Mulitmedia Broadcasting) verstanden werden. Der DAB-Standard ist beispielweise unter dem Code EN 300 401 online von dem Europäische Institut für Telekommunikationsnormen (ETSI) erhältlich.

Ein Beispiel für eine drahtlose Kommunikationsschnittstelle ist ein drahtloser Netzwerkadapter. Zum Beispiel umfasst eine drahtlose Kommunikationsschnittstelle nebst einer Antenne zumindest eine Senderschaltung und eine Empfängerschaltung oder eine Senderempfängerschaltung.

Die Komponenten 10 bis 14 der Steuerungsvorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Steuerungsvorrichtung 1 neben den Komponenten 10 bis 14 weitere Komponenten (z.B. eine Benutzerschnittstelle und/oder eine weitere drahtgebundene oder drahtlose Kommunikationsschnittstelle) umfassen kann.

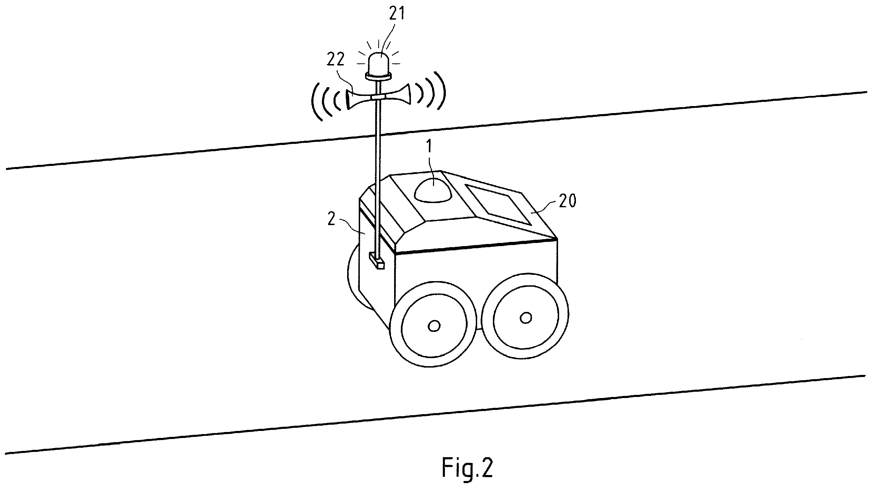

In Fig. 2 ist die im Zusammenhang mit Fig. 1 offenbarte Steuerungsvorrichtung 1 beispielhaft als Teil eines unbemannten Fahrzeugs 2 dargestellt. Das unbemannte Fahrzeug 2 ist ein Landfahrzeug und weist ein mit einer Tür verschlossenes Aufnahmefach 20 auf. In dem Aufnahmefach 20 kann das unbemannte Fahrzeug 2 eine Sendung transportieren. Zum Beispiel handelt es sich bei dem unbemannten Fahrzeug 2 um eine Transportdrohne. Beispielsweise ist das unbemannte Fahrzeug eingerichtet zum zumindest teilweise autonomen Ausliefern einer Sendung. Die Steuerungsvorrichtung 1 ist beispielsweise eingerichtet, ein solches zumindest teilweise autonomes Ausliefern einer Sendung durch das unbemannte Fahrzeug 2 zu steuern.

Ferner weist das unbemannte Fahrzeug 2 in Fig. 2 beispielhaft eine Blinklicht 21 und eine Sirene 22 auf, die zum Ausführen signalbasierter Abwehrmaßnahmen dienen. Das Blinklicht 21 ist beispielsweise eingerichtet zum Ausgeben eines optischen Blinksignals, und die Sirene 22 ist beispielsweise eingerichtet zum Ausgeben eines akustischen Sirenensignals. Die Steuerungsvorrichtung 1 ist beispielsweise eingerichtet, das Blinklicht 21 und die Sirene 22 anzusteuern.

Es versteht sich, dass das unbemannte Fahrzeug 2 alternativ oder zusätzlich weitere Mittel zum Ausführen von Abwehrmaßnahmen aufweisen kann. Zum Beispiel kann das unbemannte Fahrzeug einen elektrischen Spannungsgenerator aufweisen, der eingerichtet ist, elektrische Spannungsimpulse zu erzeugen. Ferner ist der Spannungsgenerator derart mit einer metallischen Oberfläche oder eines metallischen Teils der Oberfläche des unbemannten Fahrzeugs 2 verschaltet, das von dem Spannungsgenerator erzeugte elektrische Spannungsimpulse von der metallischen Oberfläche oder des metallischen Teils der Oberfläche des unbemannten Fahrzeugs 2 übertragen werden können. Ein solcher Spannungsgenerator dient beispielsweise zum Ausführen einer bei Kontakt mit dem unbemannten Fahrzeug 2 oder einem Teil des unbemannten Fahrzeugs 2 wirkenden Abwehrmaßnahme.

Fig. 3 zeigt ein Flussdiagramm mit Schritten einer beispielhaften Ausführungsform eines erfindungsgemäßen Verfahrens, wobei gemäß der Erfindung die zumindest eine Abwehrmaßnahme zu einer Gruppe von das unbemannte Fahrzeug oder einen Teil des unbemannten Fahrzeugs fixierenden Abwehrmaßnahmen gehört. Im Folgenden wird beispielhaft angenommen, dass die Schritte 301 bis 305 des Flussdiagramms 300 durch die Steuerungsvorrichtung 1, die Teil des unbemannten Fahrzeugs 2 in Fig. 2 ist, ausgeführt werden.

In einem Schritt 301 werden mehrere Sensorinformationen an der Steuerungsvorrichtung 1 erhalten. Zum Beispiel repräsentieren die Sensorinformationen von den Sensoren 13 erfasste Umwelteigenschaften an der Position des unbemannten Fahrzeugs 2.

In einem Schritt 302 wird zumindest teilweise abhängig von den in Schritt 301 erhaltenen Sensorinformationen bestimmt, ob eine Gefährdung besteht.

Unter einer Gefährdung soll, wie oben offenbart, beispielweise verstanden werden, dass eine bestimmte Wahrscheinlichkeit (z.B. mehr als 50 %, vorzugsweise mehr als 75 %, besonders vorzugsweise mehr als 90 %) einer Beschädigung (z.B. einer Funktionszerstörung und/oder Funktionsbeeinträchtigung) und/oder einer unberechtigten Verwendung (z.B. eines Diebstahls) des unbemannten Fahrzeugs 2 und/oder einer von dem unbemannten Fahrzeug 2 transportierten Sendung besteht.

Zum Beispiel kann das Bestimmen in Schritt 302 gemäß einer oder mehreren vorgegebenen Regeln erfolgen. Zum Beispiel sind entsprechende Regelinformationen, die die vorgegebenen Regeln repräsentieren, in Speicher 11 der Steuerungsvorrichtung gespeichert.

Die vorgegebenen Regeln, können beispielsweise für den Fall, dass bestimmte Sensorinformationen erhalten werden, vorgeben, dass eine Gefährdung besteht. Ferner können die Regeln vorgeben, welcher Art eine Gefährdung ist, wenn bestimmt wird, dass eine Gefährdung besteht. Zum Beispiel können die Regeln vorgeben, dass, wenn ein Türöffnungssensor anzeigt, dass die Tür des Aufnahmefachs 20 geöffnet wurde, ohne dass sich die Steuerungsvorrichtung 1 an der Empfängeradresse befindet (z.B. erfasst durch einen Positionssensor) und/oder zuvor an der Steuerungsvorrichtung 1 ein Türöffnungsberechtigungscode (z.B. durch eine Eingabe auf einer Benutzerschnittstelle der Steuerungsvorrichtung 1) erhalten wurde, eine Gefährdung besteht und dass die Art der Gefährdung ein möglicher Diebstahl ist.

Alternativ oder zusätzlich kann das Bestimmen in Schritt 302, wie oben offenbart, auch gemäß einem Algorithmus zur Mustererkennung und/oder gemäß einem Algorithmus zum maschinellen Lernen erfolgen.

Wenn bestimmt wird, dass eine Gefährdung besteht, wird das Flussdiagramm mit einem Schritt 304 fortgesetzt. Andernfalls wird das Flussdiagramm in einem Schritt 303 beispielsweise beendet oder mit Schritt 301 neu gestartet.

In Schritt 304 wird zumindest eine Abwehrmaßnahme aus einer Gruppe von das unbemannte Fahrzeug oder einen Teil des unbemannten Fahrzeugs fixierenden Abwehrmaßnahmen zum Abwehren der Gefährdung bestimmt.

Das unbemannte Fahrzeug 2 weist beispielsweise ein Blinklicht 21 und eine Sirene 22 zum Ausführen signalbasierter Abwehrmaßnahmen auf. Wie oben offenbart, kann das unbemannte Fahrzeug 2 zusätzlich zu der zumindest einen Abwehrmaßnahme,welche zu einer Gruppe von das unbemannte Fahrzeug oder einen Teil des unbemannten Fahrzeugs fixierenden Abwehrmaßnahmen gehört, weitere Mittel zum Ausführen von Abwehrmaßnahmen aufweisen.

Das Bestimmen der zumindest einen zu einer Gruppe von das unbemannte Fahrzeug oder einen Teil des unbemannten Fahrzeugs fixierenden Abwehrmaßnahme in Schritt 304 erfolgt zum Beispiel gemäß einer oder mehreren vorgegebenen Regeln. Die Art der Gefährdung wird beispielsweise zumindest teilweise als Ergebnis des Bestimmens in Schritt 302, ob eine Gefährdung besteht, erhalten und/oder bestimmt, wenn in Schritt 302 bestimmt wird, dass eine Gefährdung besteht.

Es versteht sich, dass das Auswählen der zumindest einen Abwehrmaßnahme zum Abwehren der Gefährdung gemäß einem Algorithmus zur Mustererkennung und/oder gemäß einem Algorithmus zum maschinellen Lernen erfolgen kann. Im Rahmen der Mustererkennung kann beispielsweise jede Abwehrmaßnahme zusätzlich zu der zumindest einen Abwehrmaßnahme,welche zu einer Gruppe von das unbemannte Fahrzeug oder einen Teil des unbemannten Fahrzeugs fixierenden Abwehrmaßnahmen gehört, in Abhängigkeit ihrer Eignung (z.B. Effektivität) die Gefährdung abzuwehren gewichtet werden. Zum Beispiel entspricht die Gewichtung einer Wirksamkeitserwartung und/oder der Wahrscheinlichkeit, mit der die jeweilige Abwehrmaßnahme die Wahrscheinlichkeit der Beschädigung und/oder der unberechtigten Verwendung des unbemannten Fahrzeugs und/oder einer von dem unbemannten Fahrzeug transportierten Sendung verringert. Ferner kann auch eine Verhältnismäßigkeitsabwägung (z.B. persönlicher Schaden, sozialer Schaden, Sachschaden) und/oder mögliche Kollateralschäden bei der Gewichtung berücksichtigt werden. Zum Beispiel kann von zwei Abwehrmaßnahmen, die beide die Wahrscheinlichkeit der Beschädigung und/oder der unberechtigten Verwendung des unbemannten Fahrzeugs 2 und/oder einer von dem unbemannten Fahrzeug 2 transportierten Sendung gleich verringern, die Abwehrmaßnahme höher gewichtet werden, die wahrscheinlich die geringeren Kollateralschäden bewirkt.

Es versteht sich, dass auch mehrere oder alle Abwehrmaßnahmen der Vielzahl von Abwehrmaßnahmen in Schritt 304 bestimmt und/oder ausgewählt werden können. Zum Beispiel kann vorgegeben sein, dass alle Abwehrmaßnahmen oder alle Abwehrmaßnahmen mit einer bestimmten Mindestgewichtung ausgewählt und/oder bestimmt werden.

Wenn in Schritt 302 bestimmt wurde, dass eine Gefährdung besteht und die Art der Gefährdung ein möglicher Diebstahl ist, können in Schritt 304 beispielsweise alle signalbasierten Abwehrmaßnahmen, die durch das unbemannten Fahrzeug 2 und/oder Mittel des unbemannten Fahrzeugs 2 ausführbar sind, bestimmt und/oder ausgewählt werden.

In Schritt 305 wird die in Schritt 304 bestimmte zumindest eine Abwehrmaßnahme ausgeführt und/oder das Ausführen dieser Abwehrmaßnahme bewirkt. Es versteht sich, dass in Schritt 305 auch mehrere oder alle Abwehrmaßnahmen ausgeführt und/oder das Ausführen dieser Abwehrmaßnahmen bewirkt werden kann, wenn in Schritt 305 mehrere Abwehrmaßnahmen zum Abwehren der Gefährdung bestimmt wurden.

Unter dem Bewirken einer Abwehrmaßnahme soll beispielsweise verstanden werden, dass die Steuerungsvorrichtung 1 das unbemannte Fahrzeug 2 und/oder Mittel des unbemannten Fahrzeugs 2 veranlasst, diese Abwehrmaßnahme auszuführen. Zum Beispiel kann die Steuerungsvorrichtung 1 das unbemannte Fahrzeug 2 und/oder Mittel des unbemannten Fahrzeugs 2 entsprechend ansteuern.

Zum Beispiel kann die Steuerungsvorrichtung 1 in Schritt 305 das Blinklicht 21 zum Ausgeben eines (optischen) Blinksignals und die Sirene 22 zum Ausgeben eines (akustischen) Sirenensignals ansteuern, wenn in Schritt 304 alle signalbasierten Abwehrmaßnahmen, die durch das unbemannten Fahrzeug 2 und/oder Mittel des unbemannten Fahrzeugs 2 ausführbar sind, bestimmt und/oder ausgewählt werden.

In einem optionalen weiteren Schritt können weitere Sensorinformationen erhalten und zumindest teilweise abhängig von diesen weiteren Sensorinformationen bestimmt werden, ob die Gefährdung weiterhin besteht. Wenn sich ergibt, dass die Gefährdung nicht mehr besteht, wird beispielsweise ein Stopp der in Schritt 305 ausgeführten und/oder bewirkten Abwehrmaßnahmen bewirkt. Andernfalls werden beispielsweise Schritte 304 bis 305 wiederholt, um ggfs. weitere Abwehrmaßnahmen (z.B. weniger milde Abwehrmaßnahmen) bewirken zu können.

Ferner kann vorgesehen sein, dass Dokumentationsinformationen zum Dokumentieren der Gefährdung und/oder der Abwehr der Gefährdung in Speicher 11 der Steuerungsvorrichtung 1 gespeichert werden. Die Dokumentationsinformationen enthalten beispielsweise von den Sensoren 13 erhaltene Sensorinformationen.

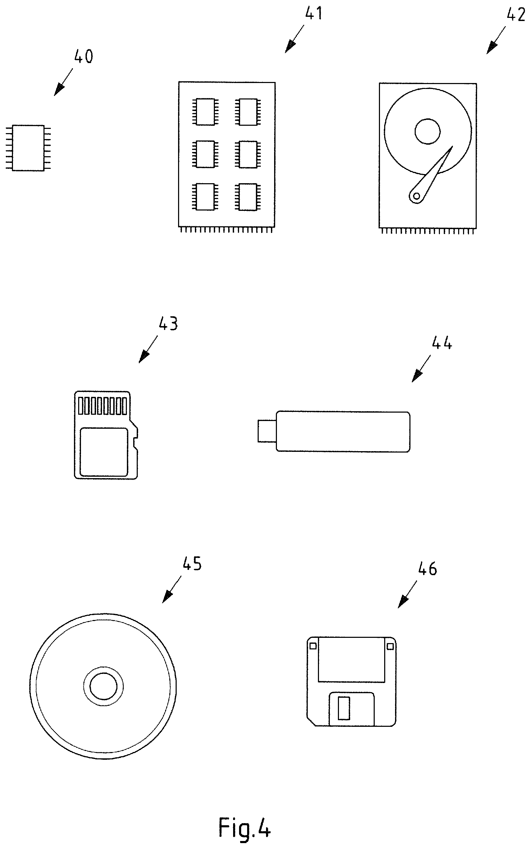

Fig. 4 zeigt schließlich beispielhafte Ausführungsformen von Speichermedien, auf denen ein Ausführungsbeispiel eines erfindungsgemäßen Computerprogramms gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 10 der Fig. 1) sein, beispielsweise ein (nicht-flüchtiger oder flüchtiger) Programmspeicher des Prozessors oder ein Teil davon (z.B. Speicher 11 in Fig. 1). Ausführungsbeispiele eines Speichermediums sind ein Flash-Speicher 40, eine SSD-Festplatte 41, eine magnetische Festplatte 42, eine Speicherkarte 43, ein Memory Stick 44 (z.B. ein USB-Stick), eine CD-ROM oder DVD 45 oder eine Diskette 46.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Abwehren einer Gefährdung, wobei das Verfahren von einer Steuerungsvorrichtung (1) für ein unbemanntes Fahrzeug (2) ausgeführt wird, und wobei das Verfahren umfasst:
- Erhalten (301) mehrerer Sensorinformationen;
- Bestimmen (302) zumindest teilweise abhängig von den erhaltenen Sensorinformationen, ob eine Gefährdung besteht;
- Bestimmen (303-304), wenn bestimmt wird, dass eine Gefährdung besteht, zumindest einer Abwehrmaßnahme zum Abwehren der Gefährdung, wobei die zumindest eine Abwehrmaßnahme zu einer Gruppe von das unbemannte Fahrzeug oder einen Teil des unbemannten Fahrzeugs (2) fixierenden Abwehrmaßnahmen gehört, wobei die zumindest eine Abwehrmaßnahme aus der Gruppe der fixierenden Abwehrmaßnahmen die folgende Aktion umfasst: Auslösen eines Fixierungsmechanismus, und wobei für den Fixierungsmechanismus Mittel zum Verankern des Fahrzeugs im Boden und/oder zum Anketten des unbemannten Fahrzeugs an ein Umgebungsobjekt eingerichtet sind;
- Ausführen und/oder Bewirken des Ausführens (305) der zumindest einen Abwehrmaßnahme.

2. Verfahren gemäß Anspruch 1, wobei die Sensorinformationen von einem oder mehreren der folgenden Sensoren (13) stammen: ein Temperatursensor, ein Drucksensor, ein Helligkeitssensor, ein Bewegungssensor, ein akustischer Sensor, ein Ultraschallsensor, ein optischer Sensor, ein Infrarotsensor, ein Lichtsensor, ein Bildsensor, ein Videosensor, ein chemischer Sensor, ein Glasbruchsensor, ein Funksensor, ein Positionssensor, ein Tür- und/oder Fenster-Öffnungssensor und/oder ein Beschleunigungssensor.

3. Verfahren nach einem der Ansprüche 1 und 2, wobei das Bestimmen (302), ob eine Gefährdung besteht, gemäß einer oder mehreren vorgegebenen Regeln und/oder gemäß einem Algorithmus zur Mustererkennung und/oder gemäß einem Algorithmus zum maschinellen Lernen erfolgt.

4. Verfahren gemäß einem der Ansprüche 1 bis 3, wobei das Bestimmen (304) der zumindest einen Abwehrmaßnahme aus der Gruppe von das unbemannte Fahrzeug oder einen Teil des unbemannten Fahrzeugs (2) fixierenden Abwehrmaßnahmen zum Abwehren der Gefährdung zumindest teilweise abhängig von der Art der Gefährdung erfolgt.

5. Verfahren gemäß einem der Ansprüche 1 bis 4, wobei das Bestimmen (304) der zumindest einen Abwehrmaßnahme zum Abwehren der Gefährdung durch das Auswählen der zumindest einen Abwehrmaßnahme zum Abwehren der Gefährdung aus einer Vielzahl von Abwehrmaßnahmen aus der Gruppe von das unbemannte Fahrzeug oder einen Teil des unbemannten Fahrzeugs (2) fixierenden Abwehrmaßnahmen erfolgt.

6. Verfahren gemäß Anspruch 5, wobei mehrere Abwehrmaßnahmen zusätzlich zu der Abwehrmaßnahme aus der Gruppe von das unbemannte Fahrzeug oder einen Teil des unbemannten Fahrzeugs (2) fixierenden Abwehrmaßnahme aus einer Vielzahl von Abwehrmaßnahmen ausgewählt werden.

7. Verfahren gemäß Anspruch 6, wobei zusätzlich zu der Abwehrmaßnahme aus der Gruppe der das unbemannte Fahrzeug oder einen Teil des unbemannten Fahrzeugs (2) fixierenden Abwehrmaßnahmen zumindest eine weitere Abwehrmaßnahme der Vielzahl von Abwehrmaßnahmen zu einer der folgenden Gruppen von Abwehrmaßnahmen gehört:
- signalbasierte Abwehrmaßnahmen,
- bei Kontakt mit dem unbemannten Fahrzeug (2) oder einem Teil des unbemannten Fahrzeugs (2) wirkende Abwehrmaßnahmen, und/oder
- in einer Entfernung zu dem unbemannten Fahrzeug (2) oder einem Teil des unbemannten Fahrzeugs (2) wirkende Abwehrmaßnahmen.

8. Verfahren gemäß Anspruch 7, wobei eine signalbasierte Abwehrmaßnahme die folgende Aktion umfasst:
- Ausgeben eines Signals, insbesondere eines optischen und/oder akustischen und/oder olfaktorischen Signals.

9. Verfahren gemäß einem der Ansprüche 7und 8, wobei eine bei Kontakt mit dem unbemannten Fahrzeug (2) oder einem Teil des unbemannten Fahrzeugs (2) wirkende Abwehrmaßnahme eine oder mehrere der folgenden Aktionen umfasst:
- Verändern der Oberfläche oder eines Teils der Oberfläche des unbemannten Fahrzeugs (2),
- Anlegen einer elektrischen Spannung an der Oberfläche oder eines Teils der Oberfläche des unbemannten Fahrzeugs (2), und/oder
- Benetzen der Oberfläche oder eines Teils der Oberfläche des unbemannten Fahrzeugs (2) mit einer Flüssigkeit.

10. Verfahren gemäß einem der Ansprüche 7 bis 9, wobei eine in einer Entfernung zu dem unbemannten Fahrzeug (2) oder einem Teil des unbemannten Fahrzeugs (2) wirkende Abwehrmaßnahme eine oder mehrere der folgenden Aktionen umfasst:
- Auswerfen eines Fangnetzes,
- Auslösen einer Distanz-Elektroimpulswaffe,
- Auslösen einer Schall- und/oder Strahlenkanone, und/oder
- Versprühen einer Flüssigkeit und/oder eines Gases.

11. Verfahren nach einem der Ansprüche 1 bis 10, wobei das Verfahren ferner umfasst:
- Speichern und/oder Veranlassen des Speicherns von Dokumentationsinformationen zum Dokumentieren der Gefährdung und/oder der Abwehr der Gefährdung.

12. Verfahren nach einem der Ansprüche 1 bis 11, wobei das Verfahren ferner umfasst:
- Erhalten weiterer Sensorinformationen; und
- Bestimmen zumindest teilweise abhängig von den erhaltenen weiteren Sensorinformationen, ob die Gefährdung weiterhin besteht.

13. Computerprogramm, umfassend Programmanweisungen, die dazu ausgebildet sind, bei Ausführung durch mindestens einen Prozessor (10) eine Vorrichtung (1, 2) zu veranlassen, das Verfahren gemäß einem der Ansprüche 1 bis 12 auszuführen.

14. Steuerungsvorrichtung (1) für ein unbemanntes Fahrzeug (2), umfassend:
- Mittel (10-14) eingerichtet zur Ausführung des Verfahrens nach einem der Ansprüche 1 bis 12.

## Claims

1. A method for averting a danger, wherein the method is performed by a control apparatus (1) for an unmanned vehicle (2), and wherein the method comprises:
- obtaining (301) multiple pieces of sensor information;
- determining (302), at least partially depending on the obtained pieces of sensor information, whether a danger exists;
- determining (303-304), if it is determined that a danger exists, at least one averting measure for averting the danger, wherein the at least one averting measure belongs to a plurality of averting measures which fix the unmanned vehicle or a part of the unmanned vehicle (2), wherein the at least one averting measure from the plurality of averting measures comprises the following action: triggering a fixation mechanism, and wherein for the fixation mechanism means are provided for anchoring the vehicle to the ground and/or for chaining the unmanned vehicle to a surrounding object;
- performing and/or causing the performing (305) of the at least one averting measure.

2. The method according to claim 1, wherein the sensor information originates from one or more of the following sensors (13): a temperature sensor, a pressure sensor, a brightness sensor, a motion sensor, an acoustic sensor, an ultrasonic sensor, an optical sensor, an infrared sensor, a light sensor, an image sensor, a video sensor, a chemical sensor, a glass breakage sensor, a radio sensor, a position sensor, a door and/or window opening sensor and/or an acceleration sensor.

3. A method according to any one of claims 1 and 2, wherein determining (302) whether a danger exists is carried out according to one or more predetermined rules and/or according to a pattern recognition algorithm and/or according to a machine learning algorithm.

4. A method according to any one of claims 1 to 3, wherein the determining (304) of the at least one averting measure from the group of averting measures fixing the unmanned vehicle or a part of the unmanned vehicle (2) for averting the danger is at least partly depending on the type of the danger.

5. A method according to any one of claims 1 to 4, wherein determining (304) the at least one averting measure for averting the danger is carried out by selecting the at least one averting measure for averting the danger from a plurality of averting measures from the group of averting measures fixing the unmanned vehicle or a part of the unmanned vehicle (2).

6. The method according to claim 5, wherein a plurality of averting measures are selected from the group of averting measures fixing the unmanned vehicle or a part of the unmanned vehicle (2) in addition to the averting measure.

7. Method according to claim 6, wherein in addition to the averting measure from the group of averting measures fixing the unmanned vehicle or a part of the unmanned vehicle (2), at least one further averting measure of the plurality of averting measures belongs to one of the following groups of averting measures:
- signal-based averting measures,
- averting measures which act upon contact with the unmanned vehicle (2) or a part of the unmanned vehicle (2), and/or
- averting measures which act at a distance from the unmanned vehicle (2) or part of the unmanned vehicle (2).

8. A method according to claim 7, wherein a signal-based averting measure comprises the following action:
- outputting a signal, in particular an optical and/or acoustic and/or olfactory signal.

9. A method according to any one of claims 7and 8, wherein a averting measure which acts upon contact with the unmanned vehicle (2) or a part of the unmanned vehicle (2) comprises one or more of the following actions:
- changing the surface or part of the surface of the unmanned vehicle (2),
- applying an electrical voltage to the surface or part of the surface of the unmanned vehicle (2), and/or
- wetting the surface or part of the surface of the unmanned vehicle (2) with a liquid.

10. A method according to any one of claims 7 to 9, wherein an averting measure which acts at a distance from the unmanned vehicle (2) or part of the unmanned vehicle (2) comprises one or more of the following measures:
- casting a net,
- triggering a distance electroshock weapon,
- triggering a sound and/or radiation gun, and/or
- spraying a liquid and/or gas.

11. A method according to any one of claims 1 to 10, wherein the method further comprises:
- storing and/or prompting the storing of pieces of documentation information for documenting the danger and/or averting the danger.

12. The method of any one of claims 1 to 11, wherein the method further comprises:
- obtaining further pieces of sensor information; and
- determining, at least partially depending on the obtained further pieces of sensor information, whether the danger still exists.

13. A computer program comprising program instructions which are configured, when executed by at least one processor (10), to cause an apparatus (1, 2) to perform the method according to any one of claims 1 to 12.

14. Control apparatus (1) for an unmanned vehicle (2), comprising:
- Means (10-14) arranged for carrying out the method according to any one of claims 1 to 12.

## Revendications

1. Procédé de prévention d'un danger, le procédé étant exécuté par un dispositif de commande (1) pour un véhicule sans équipage (2), le procédé comprenant:
- obtenir (301) plusieurs informations sur les capteurs;
- déterminer (302), au moins en partie en fonction des informations de capteur obtenues, s'il existe un danger ;
- déterminer (303-304), lorsqu'il est déterminé qu'il existe un danger, au moins une mesure de défense pour écarter le danger, ladite au moins une mesure de défense appartenant à un groupe de mesures de défense fixant le véhicule sans équipage ou une partie du véhicule sans équipage (2), ladite au moins une mesure de défense parmi le groupe de mesures de défense fixantes comprenant l'action suivante:
déclenchement d'un mécanisme de fixation, et dans lequel, pour le mécanisme de fixation, des moyens sont aménagés pour ancrer le véhicule dans le sol et/ou pour enchaîner le véhicule sans équipage à un objet environnant;
- exécuter et/ou provoquer l'exécution (305) de ladite au moins une mesure de défense.

2. Procédé selon la revendication 1, dans lequel les informations sur les capteurs proviennent d'un ou plusieurs des capteurs (13) suivants: un capteur de température, un capteur de pression, un capteur de luminosité, un capteur de mouvement, un capteur acoustique, un capteur à ultrasons, un capteur optique, un capteur infrarouge, un capteur de lumière, un capteur d'image, un capteur vidéo, un capteur chimique, un capteur de bris de verre, un capteur radio, un capteur de position, un capteur d'ouverture de porte et/ou de fenêtre et/ou un capteur d'accélération.

3. Procédé selon l'une quelconque des revendications 1 et 2, dans lequel la détermination (302) de l'existence d'un danger est effectuée conformément à une ou plusieurs règles prédéterminées et/ou conformément à un algorithme de reconnaissance de formes et/ou conformément à un algorithme d'apprentissage automatique.

4. Procédé selon l'une des revendications 1 à 3, dans lequel la détermination (304) de l'au moins une mesure de défense parmi le groupe de mesures de défense fixant le véhicule sans équipage ou une partie du véhicule sans équipage (2) pour écarter le danger s'effectue au moins en partie en fonction de la nature du danger.

5. Procédé selon l'une quelconque des revendications 1 à 4, dans lequel la détermination (304) de la au moins une mesure de défense pour écarter le danger est effectuée en sélectionnant la au moins une mesure de défense pour écarter le danger parmi une pluralité de mesures de défense parmi le groupe de mesures de défense fixant le véhicule sans équipage ou une partie du véhicule sans équipage (2).

6. Procédé selon la revendication 5, dans lequel plusieurs mesures de défense sont sélectionnées en plus de la mesure de défense parmi le groupe de mesures de défense fixant le véhicule sans équipage ou une partie du véhicule sans équipage (2) parmi une pluralité de mesures de défense.

7. Procédé selon la revendication 6, dans lequel, en plus de la mesure de défense du groupe des mesures de défense fixant le véhicule sans équipage ou une partie du véhicule sans équipage (2), au moins une autre mesure de défense de la pluralité de mesures de défense appartient à l'un des groupes de mesures de défense suivants:
- des mesures de défense basées sur le signal,
- des mesures de défense agissant en cas de contact avec le véhicule sans équipage (2) ou une partie du véhicule sans équipage (2), et/ou
- des mesures de défense agissant à distance du véhicule sans équipage (2) ou d'une partie du véhicule sans équipage (2).

8. Procédé selon la revendication 7, dans lequel une mesure de défense basée sur un signal comprend l'action suivante:
- émettre un signal, en particulier un signal optique et/ou acoustique et/ou olfactif.

9. Procédé selon l'une quelconque des revendications 7 et 8, dans lequel une mesure de défense agissant lors d'un contact avec le véhicule sans équipage (2) ou une partie du véhicule sans équipage (2) comprend une ou plusieurs des actions suivantes:
- Modifier la surface ou une partie de la surface du véhicule sans équipage (2),
- l'application d'une tension électrique à la surface ou à une partie de la surface du véhicule sans équipage (2), et/ou
- le mouillage de la surface ou d'une partie de la surface du véhicule sans équipage (2) avec un liquide.

10. Procédé selon l'une quelconque des revendications 7 à 9, dans lequel une mesure de défense agissant à une distance du véhicule sans équipage (2) ou d'une partie du véhicule sans équipage (2) comprend une ou plusieurs des actions suivantes:
- Lancer un filet de capture,
- Déclenchement d'une arme à impulsion électrique à distance,
- le déclenchement d'un canon à son et/ou à rayons, et/ou
- Pulvérisation d'un liquide et/ou d'un gaz.

11. Procédé selon l'une quelconque des revendications 1 à 10, ledit procédé comprenant en outre:
- Enregistrer et/ou provoquer l'enregistrement d'informations documentaires pour documenter le danger et/ou la prévention du danger.

12. Procédé selon l'une quelconque des revendications 1 à 11, ledit procédé comprenant en outre:
- l'obtention d'autres informations sur les capteurs ; et
- Déterminent, au moins en partie en fonction des autres informations de capteurs obtenues, si le danger persiste.

13. Programme informatique comprenant des instructions de programme adaptées pour, lorsqu'elles sont exécutées par au moins un processeur (10), amener un dispositif (1, 2) à mettre en œuvre le procédé selon l'une quelconque des revendications 1 à 12.

14. Dispositif de commande (1) pour un véhicule sans équipage (2), comprenant:
- Moyens (10-14) agencés pour mettre en œuvre le procédé selon l'une des revendications 1 à 12.
